# EUROPEAN PATENT APPLICATION

(11) **EP 4 611 214 A1**
(43) Date of publication of application: **03.09.2025**
(21) Application number: 24020100.4
(22) Date of filing: 30.03.2024
(51) Int. Cl.: H02J 9/06, H02J 3/00, H02J 1/08

(54) **ELECTRICAL DEVICE WITH AUTOMATIC POWER TRANSFER CAPABILITY**

(30) Priority: 27.02.2024 GR 20240100139; 28.03.2024 EP 24020099
(71) Applicant: Instagrid GmbH, 71636 Ludwigsburg (DE)
(72) Inventor: NIKOLOPOULOS, Konstantinos, London (GB); FIEDLER, Florian, Berlin (DE); GUTKNECHT, Philipp, Mönsheim (DE)
(74) Representative: Eisenführ Speiser

(57) **Abstract**

An electrical device (100), such as an automatic transfer switch or an electrical power distributor, comprises: a first electrical power input (101); a second electrical power input (102); an electrical power output (121, 122, 123); a switching circuit (105) operable to route electrical power from the electrical power inputs to the electrical power output; the switching circuit comprising: a first switching element (111) to allow, when enabled, power flow from the first electrical power input to the electrical power output; and a second switching element (112) to allow, when enabled, power flow from the second electrical power input to the electrical power output; a controller (110) operable to control the switching circuit to switch to the first electrical power input or the second electrical power input for selecting which of said electrical power inputs is to supply electrical power at the electrical power output; wherein the electrical device is operable to determine a timing sequence of switching between the first electrical power input and the second electrical power input.

## Description

The present disclosure relates to an electrical device, e.g., an automatic transfer switch or a power distributor, particularly stand-alone portable ones, related methods, and software products.

Portable power supplies are suitable for providing electrical power at various locations such as construction sites where permanent power has not been established. They may be critical for powering tools, lighting, equipment, and other temporary installations.

Portable power supplies (e.g., for use at construction sites) are mobile electrical systems designed to temporarily provide electric power to electrical consumers such as tools, machinery, and lighting systems where permanent power is not yet or not reliably available. It is desirable that such systems are rugged and self-contained such that they can be easily transported and positioned around different parts of the site. Alternative solution may be fuel-powered generators however, fuel-powered generators can have some drawbacks such as: various kinds of emissions caused by combustion of fuel in fuel-powered generators. Fuel-powered generators emit noise, carbon dioxide and other environmentally detrimental pollutants which can cause concern for both environmental impact and the health of the workers on-site. Furthermore, in some areas, there may be restrictions on the use of fuel-powered generators due to noise ordinances or emission regulations. Moreover, certain sites such as enclosed spaces may not be suitable to be powered by combustion engine based generators.

For portability and ease of use by a single user, the total weight of a portable power supply is desirable to be kept low. This however typically sets a limit to the capacity of these devices. Sometimes, multiple power supplies or sources may be provided at sites to have enough energy capacity, or as backup power. There can thus be cases where there is a demand for higher capacity, while maintaining portability. It may further be desirable to have electrical power delivery systems which are not only portable, but also easy to handle for common user.

At least some of the problems mentioned above will be shown solved by the subject matter of the herein included independent claims. The dependent claims and aspects in the specification show certain other advantageous improvements.

When viewed from a first perspective, there can be provided an electrical device, e.g., embodied as an automatic electrical power transfer switch or an electrical power distributor, which allows multiple electrical power sources to be, each individually, connected at a respective electrical power input of the device, to be automatically selectably connected to at least one electrical power output, or a plurality of electrical power outputs, thereby powering any electrical power consumers (e.g., electrical loads) connected at those one or more electrical power outputs to be powered from the selected electrical power source. In some non-limiting embodiments, the electrical device may comprise a plurality of electrical power outputs.

It can be particularly desirable that the electrical device is separate from the electrical power sources. By "separate" it is meant that the electrical device is a self-contained unit (e.g., being enclosed in a housing which is physically separated and external from the any of the electrical power sources and electrical power consumers). In other words, it can be said that the electrical device does not comprise any electrical battery which is able to supply energy stored thereon at any of the electrical power outputs (e.g., to any electrical power consumers connected at the electrical power outputs). Thus, each of the electrical power sources are external and separatably connectable to the electrical device via one of the electrical power inputs. Similarly, each of the electrical power consumers are external and separatably connectable via any of the electrical power outputs.

Accordingly, the electrical device is preferably separatably electrically connectable to any of the electrical power sources and electrical power consumers. For example, separatable electrical connection can be established via an electrical cable or similar electrical medium connectable by a common user without requiring any specialized qualifications to perform electrical installations. A separatable electrical connection at input can be achieved, e.g., by connecting an electrical power source at an input port of the electrical device via an electrical cable (e.g., a standard power cable). Similarly, separatable electrical connection at output can be achieved, e.g., by connecting an electrical power consumer at an output port of the electrical device via an electrical cable (e.g., a standard power cable). It shall be appreciated that an input port may be realized e.g., as an electrical socket of standard or non-standard type. Similarly, an output port may be realized e.g., as an electrical socket of standard or non-standard type. An input port may be similar to an output port, e.g., same type of electrical sockets, or they may be of different types. More generally, input ports and/or output ports may all be of same type, or some or all may be of different types. An advantage of doing so is that the electrical device can be made independent of the type of electrical power source and consumer, thus providing flexibility in choosing and hooking-up various kinds of sources and consumers, as desired by the user, to the electrical device. For example, the kind of power source which should be used for powering a specific kind of consumer. The electrical device can even enhance the reliability of operation by ensuring a continuous power supply, as the device can receive and automatically route power from two or more distinct sources.

Additionally, or alternatively, some or all of the more than one electrical power outputs may be individually switchable (e.g., ON/OFF). Accordingly, the electrical device may be operable to provide a controllable power distribution means to allocate power to different electrical power outputs dependent on pre-determined criteria and/or monitored parameters. For example, due to certain limitations at one or more of the power sources and/or one or more electrical power inputs, the electrical device may prioritize powering certain outputs, e.g., by switching OFF some or all of the other outputs.

In this disclosure, the terms "electrical device", "power transfer switch" and "electrical power distributor" may be used interchangeably without affecting the scope or generality of the present teachings. It can also be contemplated that the power transfer switch is a part of an electrical device or unit which performs power distribution. However, in particularly desirable form, irrespective of the term in use, the device is connectable/separatable from the electrical power sources and from the electrical power consumers by a common user.

It can be desirable for the electrical device to have safety functionalities which can improve the usability and safety for a common user who does not necessarily have specialist knowledge of electrical safety.

Thus, there can be provided an electrical device comprising: a first electrical power input; a second electrical power input; an electrical power output; a switching circuit operable to route electrical power from the electrical power inputs to the electrical power output; the switching circuit comprising: a first switching element activable to facilitate delivery of electrical power from the first electrical power input to the electrical power output; and a second switching element activable to facilitate delivery of electrical power from the second electrical power input to the electrical power output; a controller operable to control the switching circuit to switch to the first electrical power input or the second electrical power input for selecting which of said electrical power inputs is to supply electrical power at the electrical power output; wherein the electrical device is operable to determine a timing sequence of switching between the first electrical power input and the second electrical power input.

More specifically, there can be provided an electrical device comprising:
- a first electrical power input connectable to receive electrical power from a first power source;
- a second electrical power input connectable to receive electrical power from a second power source different from the first power source;
- an electrical power output connectable to supply electrical power to an electrical power consumer;
- a switching circuit operable to route electrical power from the electrical power inputs to the electrical power output; wherein the switching circuit comprises:
   o a first switching element activable to facilitate delivery of electrical power from the first electrical power input to the electrical power output; and
   ∘ a second switching element activable to facilitate delivery of electrical power from the second electrical power input to the electrical power output;
- a controller operable to control the switching circuit to switch to the first electrical power input or the second electrical power input for selecting which of said electrical power inputs is to supply electrical power at the electrical power output; wherein
the electrical device is operable to determine a timing sequence of switching between the first electrical power input and the second electrical power input.

It shall be appreciated that in a preferable form, the electrical power inputs are separatably connectable to the respective power sources. Similarly, the at least one electrical power output (e.g., all outputs) is separatably connectable to the respective electrical power consumer by a common user. It shall be appreciated that by being "separatably connectable by a common user" it is meant that the power inputs and power outputs are easily connectable and detachable from the respective power sources and consumers, e.g., without requiring special tools and/or the user being qualified to do so. For example, the user required to being a qualified specialist such as an electrician for connecting or disconnecting the sources or consumers at the electrical device (via power inputs / outputs) would not be considered to be "separatably connectable by a common user". For example, a power input being connectable to an electrical power source via an electrical cable having plug/socket arrangement for establishing the connection between said source and power input would qualify as being "separatably connectable by a common user". Similarly, a power output being connectable to an electrical power consumer via an electrical cable having plug/socket arrangement for establishing the connection between said source and power input would qualify as being "separatably connectable by a common user". The plug/socket arrangement may be any type of AC power plugs and sockets or DC power plugs and sockets. As non-limiting examples, any standards such as CEE, BS, NEMA, or non-standard versions may be used as connectable electrical power inputs and/or electrical power outputs of the electrical power unit.

The switching circuit allows for seamless transition between electrical power sources, minimizing disruption to one or more electrical power consumers which are being powered by their respective electrical power output. The device can provide significant advantages when at least some of the electrical sources are electrical energy units having their own energy storage reserve. Some examples of such energy units are energy storage based power supplies, fuel-cells or even combustion fuel based units. By "energy storage based power supplies" it is meant power supplies in which electrical energy is stored in one or more energy storage elements. Some non-limiting examples of energy storage elements are batteries, capacitors or super-capacitors, their likes or their combinations. Since such units have a limited energy storage reserve before it runs out, these units have a limited capacity for continuous operation. When the energy storage reserve depletes (e.g., while supplying power), it needs to be charged or recharged, e.g., by charging the batteries, or refilling the fuel, etc. This can involve disruption or downtime prior to continuing with the work at hand. Sometimes, the work at hand may need more time than a particular energy unit can continuously run for prior to needed a recharge or refill. In some case, this may involve swapping the depleted power source with another power source. This may cause interruption to the work at hand, specifically with sensitive appliances such as computers that may require lengthy start-up procedures or reconfiguration caused by the power disruption. A solution can be to choose a higher capacity unit, but that can be more expensive. Moreover, it may be heavier or less portable.

It shall be appreciated that the proposed devices and methods can allow multiple of smaller such energy units to operate in such a way that an essentially uninterrupted power can be provided for the work at hand (e.g., via one or more consumers which are receiving electrical power via the electrical device). The electrical device can thus utilize different types of power sources, such as mains grid power and/or energy units with their own energy storage reserves, providing options for reliable, renewable and sustainable powering of electrical consumers.

In some non-limiting cases, any one of the electrical power inputs of the electrical device can be a primary input, or an input which is assigned high priority for selection of power source to be used (e.g., in all or some specific condition(s)). Thus, the electrical device may comprise a first electrical power input, which in certain non-limiting embodiments is a primary input. The primary input can be used to connect a preferable power source (e.g., mains grid power), which whenever it is available is used for powering at least some of the electrical power outputs. In case of an interruption at the primary input (e.g., detection of a first depletion signal indicative of an interruption in the electrical power at the first electrical power input), the controller may operate the to control the switching circuit to switch from the first electrical power input to a second electrical power input in response to the depletion signal, thereby routing electrical power from the second electrical input to at least one of the electrical power outputs. However, the controller may operate the switching circuit to switch back to the first electrical power input in response to the detection of a power present signal (e.g., a first power present signal indicative of availability of a power source at the first input) or other indication of availability or power at the primary input. In this way, the primary input may act in certain conditions as a default source of electrical power whenever it is available. This can allow the limited reserve electrical energy units to function as backup units. For example, the primary input can be connected to a grid power or mains power which is available at fixed power outlets. That way, the device can work in an uninterrupted power supply mode.

It shall be appreciated that due to separatable connectable inputs, instead of grid power being connected to the primary input, any other preferred sources can be connected there. For example, a source which has the largest capacity, or a source which is cheaper to operate, or to connect different units such that their usage is harmonized. Other non-limiting examples of a power source can be a photovoltaic (PV) array or any other renewable power source.

The present teachings enable the electrical device to automatically determine the availability of power, improving the efficiency of power source management. Preferential source can be utilized as soon as it becomes available without manual intervention.

Thus, detection of power presence signal related to one or more electrical power inputs can facilitate energy-saving strategies by allowing the device to preferentially use a more cost-effective or environmentally friendly power source when available. In some cases, power present signal may be the converse of the depletion signal. E.g., if depletion signal for a particular source is "NO", power present signal of the electrical input where that source is connected may be "YES", and vice-versa. For example, while depletion signal is indicative of loss of power, the power present signal may indicate whenever the condition "loss of power" in not true.

In some non-limiting embodiments, a certain power source being "available" means that the depletion signal related to the source is indicative of that the energy reserve of that source satisfies a given criteria (e.g., it is above a predefined threshold and/or is in a stable state). Hence, when "available", the power source understood as being capable of supplying electrical power via the electrical device to the desired electrical power outputs, and hence to the consumers connected thereto.

It shall be appreciated that in some non-limiting embodiments, the sense circuit may be operable to detect a power present signal at (e.g., related to) one or more of the electrical power inputs, the power present signal being indicative of availability of a power source at that specific input (e.g., availability of electrical power at a given electrical power input).

Prioritizing the primary input ensures that the device operates using the preferred power source under normal conditions, which may be more stable or cost-effective. Automatic switching back to the primary input after a power interruption can reduce the need for manual resetting of the system, enhancing user convenience. The ability to revert to the primary power source can optimize the use of secondary power sources, such as batteries, by preserving their charge for when they are truly needed.

It shall also be appreciated that the present teachings can also allow swapping electrical power sources while keeping the electrical power outputs powered (e.g., so called "hot-swapping" mode). For the sake of a non-limiting example, assuming that the electrical power outputs are being powered with a first power source connected at the first electrical power input, and there is a second power source connected and available at the second electrical power input. The first power source may be running low on capacity (e.g., battery discharged in the near future) due to which the user may want to replace the first power source with a third power source. The user may then simply unhook the first power source from the first electrical power input. The electrical device will automatically detect a depletion signal at the first electrical power input (due to removal of the first power source), and switchover to sourcing power from the second power source connected at the second electrical power input, thereby allowing seamless operation of electrical consumers connected at the electrical power outputs. When the user connects the third power source at the first electrical power input, the electrical device detects power present signal at the first electrical power input. If the first electrical power input is a priority input, the electrical device switches back to sourcing power from the third power source connected at the first electrical power input. If the first electrical power input is not a priority input, the electrical device continues sourcing power from the second power source connected at the second electrical power input until it detects a second depletion signal indicative of loss of power at the second electrical power input. This is an example of how the proposed teachings can facilitate and simplify reliable and user-friendly powering of electrical consumers.

The electrical device may include a switching circuit which is operable to select (e.g., route) the electrical power input via which one or more electrical power outputs of the device are to be powered. In some non-limiting aspects, the device (e.g., as a part of the switching circuit) includes at least one protection device such as a residual-current detector ("PCD") per electrical output. Alternatively, or in addition, other protection devices such as one or more Insulation Monitoring Devices ("IMD") may be deployed for monitoring and/or safety override of the electrical device. A specific kind of protection device is not essential to the present teachings. This can help prevent electrical fault from one consumer from affecting one or more other electrical power consumers. This can also allow day-to-day users to use the device more safely, while providing multiple electrical power outputs or outlets to be able to power multiple electrical consumers from a single electrical device, and additionally providing an uninterrupted operation even in case one power sources fails, while other power sources connected at other inputs are available.

In some non-limiting embodiments, not all electrical power outputs may require a protection device (e.g., an RCD). Thus, in some cases, the switching circuit may be protected by a line breaker and split up to multiple power outputs (e.g., multiple power sockets). In some cases, each electrical power output is protected by a protection device, such as type-A or type-B RCD.

An advantage of providing an individual protection device per electrical power output is that this can prevent a fault current from flowing which is higher than the limit which each protection devices would tolerate. Due to this scheme, at least one of the protection devices would trip, thereby preventing a larger than tolerable fault current from flowing, thus improving safe operation via the electrical device. The electrical power outputs may additionally be protected by a circuit breaker.

Thus, at least in some non-limiting aspects, through the combination of a transfer switch capability with multiple protected outputs, especially in one portable housing, the present solution (e.g., the electrical device and/or related methods) can enable continuous operation of different kinds of equipment on demanding sites such as construction sites. The solution can be usable by a non-specialized (e.g., common) person.

In some non-limiting aspects, the electrical device can have three electrical power inputs, each protected by an input fuse. Each electrical power input can be switched through to power one or multiple outputs, e.g., three electrical power outputs. An advantage of the input fuse can be that it can improve overall protection of the electrical device. For example, in cases where one or more protection elements monitoring one or more electrical outputs do not trip on overload or an internal fault of the electrical device, the input fuse can detect an overcurrent condition irrespective of the location of the fault and cut-off input power.

The switching circuit can be controlled by controller (e.g., a microcontroller or any other computing unit) which monitors depletion signal (e.g., via sense circuit) and/or power present signal and determines electrical power from which electrical power input is to be passed through to the outputs.

In some cases, the depletion signal may be dependent on operational parameters e.g., voltage and/or frequency, related to an electrical power input (e.g., the first electrical power input) via which electrical power is supplied at one or more electrical power outputs. For example, if a drop in voltage (e.g., input voltage) is detected at the first electrical power input, a routing (e.g., switching) of electrical power from the first electrical power input to the second electrical power input may be performed, thereby routing electrical power from the second electrical input to at least one of the electrical power outputs.

Depletion signal (e.g., detecting depletion condition in the energy storage reserve) may for example be accomplished by detection of: increase, reduction or a fall in certain parameter related to an electrical power source, e.g., voltage and/or current and/or frequency of the electrical power source or at the electrical input where that power source is connected. In some non-limiting aspects, the depletion signal may be a power loss signal, i.e. a drop in the supply voltage and frequency by a certain amount within a given time. In some non-limiting aspects, a deviation value between input voltage waveform at the electrical input can be calculated from an expected voltage waveform. The depletion signal may be generated or calculated from this deviation value, or a series of time dependent deviation values. For example, it can be average or RMS voltage as described, but it can even be a metric that quantifies the spectral quality/purity of the input voltage waveform, such as harmonic distortion or a quantification of spectral noise. Sensors for providing depletion information in energy storage reserve may also include state of charge information providing a much more detailed picture of the status of the connected power supply. This may for example be achieved via a communications link between the device and one or more of the power sources. The communications link may at least partly be included in the electrical device e.g., in the form of one or more communication modules. The communications link may at least partly be included in one or more electrical power sources in the form of one or more communication modules. Without affecting the scope or generality of the present teachings, the terms "communications link", "communication link" and "communication module" will be used interchangeably in this disclosure. Communications link may include hardware components. In some non-limiting embodiments, communications link may also include software components.

In some cases, one of more of the electrical power sources may communicate their depletion signal by providing one or more pre-determined characteristics of the power provided at the electrical power input where the respective power source is connected. For example, an electrical power source may change its frequency in a particular value or manner which has a specific meaning on the controller side. Alternatively, or in addition, the electrical power source may change other characteristics such as voltage which is delivered at the corresponding electrical power input. Alternatively, or in addition, deviation in operating frequency of the electrical power source may be monitored and/or used for communication (e.g., between an electrical power source and the electrical device, e.g., via communications link). For example, for communication, the source may vary its frequency in a controllable manner e.g., from 50 Hz to 50.5 Hz, continuously or it may switch between two or more pre-determined levels (e.g., within specific time intervals). The levels may be centered around a certain frequency value, for example, the frequency of an electrical power source may intermittently switch between 49.5 Hz and 50.5 Hz so that the time average value is centered at 50 Hz. An advantage of doing this can be that the varying/switching instances can be used to communicate with the electrical device (e.g., providing depletion information) by encoding any suitable protocol, e.g., a timing protocol, bit stream, their likes or combinations.

In response to the depletion signal indicating that a power source is close to interrupting electrical power being delivered at one of the electrical power inputs (e.g., first electrical power input) the controller may initiate switching to another power source (e.g., by routing power from second electrical power input).

Such switching in response to the depletion signal may help to maintain constant operations and manage energy reserves effectively.

In some non-limiting embodiments, the electrical device may comprise a plurality of electrical power outputs (or at least two electrical power outputs). It shall be appreciated that there can also be provided an electrical device comprising a first electrical power input connectable to receive electrical power from a first power source; a second electrical power input connectable to receive electrical power from a second power source different from the first power source; and at least two electrical power outputs; each electrical power output being connectable to supply electrical power to an individual (e.g., separate) electrical power consumer by a switching circuit operable to route electrical power from the first electrical input to one or more of the electrical power outputs, wherein electrical device also comprises: a sense circuit operable to detect a depletion signal indicating an interruption in the electrical power which is being provided at the first electrical input; a controller operable to control the switching circuit to switch from the first electrical power input to the second electrical power input in response to the depletion signal, thereby routing electrical power from the second electrical input to one or more of the electrical power outputs.

It shall be appreciated that by "routing power", in this disclosure it is meant providing electrical power from a given electrical power input to one or more of the power outputs. Thus, it is here meant that the power input which is selected to provide power may be connected to a single electrical power output of the plurality of available power outputs, e.g., one single power output (e.g., preselected electrical power output), to any subgroup of power outputs, or to all power outputs.

In some non-limiting aspects, the sense circuit may be provided information indicative of an electrical power source being available (e.g., to supply electrical power at one of the electrical power inputs). The "availability" of a power source refers to that electrical power source's ability to supply electrical power at the respective input of the electrical device. A power source may be considered "available", e.g., via the power present signal being detected, and/or by providing signal indicative of conditions such as any one or more of: the power source is operational, it has sufficient energy reserve, and can provide electrical power with acceptable characteristics (e.g., voltage and frequency) for powering the loads connected to the electrical device's output(s). A power source's availability may be communicated to the electrical device through communications link which may be based on any communication protocol (e.g., standard or proprietary, wired or wireless, etc.). The communications link may facilitate signals (e.g., data) which could articulate operating status (e.g., real-time or near real-time) of the power source, including any indictors or metrics of available power capacity or energy reserve level. Some communication aspects, e.g., via parameters of the electrical power source, were discussed earlier in the present disclosure.

The depletion signal and/or the power present signal may be communicated via the communications link that may act as an intermediary between one or more of the power sources and the controller. The communications link may be wired and/or wireless, based on, e.g., power-line communication, ethernet, Bluetooth, mobile/cellular network, WiFi or any other suitable technology such as BUS communication, for example via CAN (Controller Area Network) bus/protocol. Here, wired connections are meant to include physical wires or cables that connect the power source to the communications link. An example might include an RS-232, USB, or Ethernet cable that is operable to transmit signals between the device and the source.

It shall be appreciated that Power-Line Communication (PLC) may be especially advantageous in certain aspects, as the same electrical cable which is used to connect a power source at a given electrical power input may also be used as a part of the communications link to establish communication between the power source and the device. Thus, in certain non-limiting aspects, PLC is used to at least partially provide depletion signal and/or power present signal at the electrical device.

Wireless Connections may utilize any one or more wireless communication standards, such as Bluetooth, Zigbee, Wi-Fi, or cellular networks (GSM, LTE). For example, the power source may send depletion and/or power present status signal over Wi-Fi to the communications link.

In certain non-limiting aspects, the communications link may receive signals from one or more sensors monitoring a power source's physical parameters (e.g., voltage, frequency, capacity (e.g., remaining, rate of consumption), up-time, or state of charge). For example, a battery based electrical power source could have a monitoring system that measures its one or more parameters (e.g., voltage, state of charge, capacity or their likes and/or their combinations) and provides this information (e.g., via communications link) wired and/or wirelessly to the device. If, e.g., the voltage falls below a certain level, the sense circuit may interpret this as a depletion signal which is provided to the controller. Similarly, e.g., when the sense circuit receives a signal that one or more parameters, such as voltage from a given power source are back within acceptable range, it may be interpreted as a power present signal, indicating that the power source is available again for supplying electrical power at the respective electrical power input. The controller may in response to this power present signal decide to power one or more of the outputs from that back-online power source. It shall be appreciated that this is particularly the case when the back-online source is connected to a primary input of the electrical device. In other cases, the controller may continuing to provide electrical power from the source it is connected to (e.g., at second electrical input) until a second depletion signal is detected. The second depletion signal being indicative of an interruption in the electrical power at the second electrical input, at which point the controller may switch to one of the other inputs (e.g., the input connected to the back-online power source). The latter may be the case e.g., when both inputs have equal priority. In such cases, rather than switching back and forth, the controller may switch only when needed (e.g., when an interruption in electrical power is imminent). That way the utilization of multiple power sources can be maximized and switching operations minimized.

Thus, in a non-limiting aspect, the controller is operable to prevent the switching circuit from switching from the second electrical power input to the first electrical power input until a second depletion signal occurs. The second depletion signal being indicative of an interruption in the electrical power which is being provided at the second electrical power input. The controller's ability to prevent premature switching back to the first electrical power input until the second depletion signal occurs can thus help to avoid unnecessary cycling between power sources, which can reduce wear on the switching circuit and improve overall system longevity. By ensuring that the device remains powering from the second electrical power input until an imminent power interruption there is detected, the controller can maximize the use of available power sources, leading to more stable operation and potentially reducing the frequency of manual interventions required to manage the power sources.

In some non-limiting embodiments, the electrical device comprises at least three electrical power inputs and at least three electrical power outputs. In some non-limiting embodiments, the electrical device comprises three electrical power inputs and three electrical power outputs. In some non-limiting embodiments, one of the inputs (e.g., the first electrical power input) is a primary input. In some non-limiting embodiments, any of the power inputs may be configured as a primary input.

In some non-limiting embodiments, at least some and preferably all components of (e.g., internal components) the electrical device are powered via electrical power which is available at any one or more of the electrical power inputs. The input via which the components of the electrical device are powered may be the same input which is powering the output(s), or it may be another input at which electrical power is also available. For example, the components including: the controller, the sense circuit and the switching circuit may either be powered via the first electrical power input, or at least some of them may be powered via one or more other inputs at the power is available. Accordingly, at least some of the components may also have a switchable connection to multiple inputs. This can allow flexible, more reliable and efficient use of available power. Moreover, a need of providing an internal power source may be alleviated. This can also reduce parts of the device (e.g., an internal battery) which may need replacement or require special handling/storage conditions.

In addition, or alternatively to the other modes of operation herein discussed, the electrical device may provide an "emergency operation" (e.g., "emergency lighting") mode. In one such mode, it may be monitored (e.g., via the sense circuit) presence of a depletion signal at a predetermined input (e.g., the primary input) while at least one of the electrical outputs is unpowered (e.g., not supplied any electrical power). In response to the depletion signal (indicative of loss of power at the predetermined input), at least one of the outputs which were unpowered are provided (e.g., routed) electrical power via one of the inputs where electrical power is available. In some non-limited embodiments, the unpowered outputs may be connected to emergency equipment such as emergency lights or other backup equipment which are powered automatically in response to the depletion signal. In response to the depletion signal, the device may or may not continue to power those outputs which were powered via the primary input. Thus, in response to the depletion signal, emergency equipment can be powered by one of the other inputs (e.g., connected to a battery power source) while remaining output(s) may or may not be powered dependent on how the device is configured.

Such mode can be particularly advantageous in event spaces and locations where operation of backup equipment (e.g., emergency lighting) is required (e.g., for safety rules). In such a mode, the device would monitor an input (e.g., the primary input), typically connected to the mains power, for a depletion signal. In the event of mains failure, indicated by a depletion signal from the primary power input, the device would function as mentioned above.

It shall be appreciated that the electrical power sources as discussed in this disclosure may be AC power sources, or they may be DC power sources. Moreover, there is no limitation as to whether the AC power sources are single-phase AC power sources, or they are multi-phase AC power sources (e.g., split phase or 3-phase AC power sources).

It shall be appreciated that the controller as discussed herein may be embodied as one or more components. For example, a microcontroller can be used as the controller or controlling means for the electrical device. The controller may have one or more input and/or output interfaces. The controller may process digital signals received via sensors and/or interface(s), and control the device's functionality through software-defined logic.

In some non-limiting embodiments, the electrical device is operable to determine a timing sequence of switching between the first electrical power input and the second electrical power input. Accordingly, different switching modes can be implemented for transitioning from one electrical power input to another electrical power input as per suitability, e.g., for different electrical power consumers. For example, in certain cases, a small interruption caused at the electrical power output due to transitioning from one input to another may be tolerable. For example, for heavy loads such as machine tools or motors such a transition may not even be perceptible. However, in other cases, e.g., when sensitive electrical consumers such as computers or analytical systems are being powered via the electrical device, a power dip may interfere in the desired operation of such sensitive equipment. In such cases, it may be desirable to minimize interruption in power delivered to such electrical consumers.

These can be achieved by providing different types of switching sequences: e.g., a break-before-make sequence (e.g., realized via a break-before-make logic), and a make-before-break sequence (e.g., realized via a make-before-break logic) respectively.

In some non-limiting embodiments, the switching circuit is operable with a break-before-make logic. Accordingly, e.g., for switching from the first electrical power input to the second electrical power input, the switching circuit may disconnect from the first electrical power input prior to connecting to the second electrical power input for routing power from an electrical power source connected at the second electrical power input. Thus, for each, or some, switching operation the switching circuit may disconnect electrical power output from an electrical power input prior to connecting the electrical power output to another input. This can prevent in some conditions the switching circuit from connecting to two power sources at the same time which may cause short circuit currents and potentially other system instabilities due to a lack of phase and/or frequency synchronization between the two sources.

Thus, in some non-limiting embodiments, the timing sequence is a break-before-make sequence in which the switching circuit is operable to:
- prevent delivery of electrical power to the electrical power output from the first electrical power input by deactivating the first switching element, thereby disconnecting the first electrical power input from the electrical power output; and then within a make time,
- activate the second switching element, thereby connecting the second electrical power input to the electrical power output to establish delivery of electrical power from the second electrical power input to the electrical power output.

Additionally, or alternatively, in some non-limiting embodiments, the switching circuit is operable with a make-before-break logic. Accordingly, e.g., for switching from the first electrical power input to the second electrical power input, the switching circuit may connect to the second electrical power input prior to disconnecting from the first electrical power input for routing power from an electrical power source connected at the second electrical power input. In this mode, the switching circuit will minimize the time of overlapped connection to both inputs to minimize any short circuit currents and/or other non-desired effects. Thus, for each, or some, switching operation the switching circuit may connect to another electrical power input prior to disconnecting from an electrical power input in such a way that the time-period of simultaneous connection to the two inputs is as short as possible. By "as short as possible", it is here meant ideally zero (no overlapped connection), or as close as possible to zero, however below a few milliseconds (e.g., one millisecond, in microseconds range, or in nanoseconds) could be tolerable dependent e.g., on the types of power sources, specifications of the switching stage. An advantage of doing this is that the electrical power outputs can be kept continuously powered with no delay in sourcing power (e.g., from the another electrical power input).

The make time is ideally as short as possible, and ideally "zero" i.e., no delay between deactivation of the first switching element and activating the second switching element. However, in practical cases, it may be desirable to have a brief time-delay (e.g., make time > 0) to ensure that there is no simultaneous connection of both inputs to the electrical power output. For example, make time may be around 10 milliseconds (ms) or less, e.g., 8 ms or less, or 5 ms or less, or 1 ms or less.

In some non-limiting embodiments, timing sequence is a make-before-break sequence in which the switching circuit is operable to:
- activate the second switching element, thereby connecting the second electrical power input to the electrical power output to establish delivery of electrical power from the second electrical power input to the electrical power output; and then within a break time,
- prevent delivery of electrical power to the electrical power output from the first electrical power input by deactivating the first switching element, thereby disconnecting the first electrical power input from the electrical power output.

The break time is ideally as short as possible, and ideally "zero" i.e., no delay between activation of the second switching element and deactivating the first switching element. However, in practical cases, it may be desirable to have a brief time-delay (e.g., break time > 0) to ensure that there is there is no reduction in power delivered at the electrical power output, whilst minimizing the overlap time during with both inputs are connected. For example, break time may be around 1 ms or less, around 2 ms or less, 5 ms or less, or 10 ms or less.

To further improve safety of the electrical device, in some non-limiting embodiments, in the break-before-make sequence, the controller is operable to control the switching circuit to switch from the first electrical power input to the second electrical power input by activating the second switching element after registering the deactivated status of the first switching element. By "deactivated", it is here meant that the first switching element is in such a state that the first electrical power input is disconnected from the electrical power output.

To improve safety further, in the make-before-break sequence, in response to the break time exceeding a predetermined break time value, the controller may be operable to deactivate both the first switching element and the second switching element, thereby disconnecting both electrical power inputs from the electrical power output. Thus, a short-circuit condition can be prevented due to both inputs being simultaneously connected for a longer than acceptable periods of time (e.g., predetermined break time value). According to some non-limiting examples, the predermined break time value may be around 10 ms, or around 2 ms, or around 5 ms, or around 10 ms.

In some non-limiting embodiments, the first switching element is operable to provide a first auxiliary signal indicative of a state (e.g., activated) of the first switching element, and the second switching element is operable to provide a second auxiliary signal indicative of a state (e.g., activated) of the second switching element. The auxiliary signals may be used by the controller to monitor and even ensure make break and/or break time. For example, in the break-before-make sequence, the controller may be operable to control the switching circuit to switch from the first electrical power input to the second electrical power input by activating the second switching element after registering that the first auxiliary signal is confirmative of the deactivated status of the first switching element.

It shall be appreciated that certain parts of the device (e.g., logic) may be implemented as at least partially in software logic form. For example, the switching circuit or logics as herein disclosed may be implemented as a combination of hardware and software parts.

It shall be appreciated that in certain non-limiting embodiments, the switching circuit may comprise switching components, e.g., any one or more or their combinations of: relay, contactor, semiconductor switches or their likes. For example, any of the first switching element and the second switching element may be a semiconductor switch or a relay, a semiconductor switch such as a TRIAC (triode for alternating current) or a solid-state relay (SSR), e.g., SSR based on electronic components or semiconductors such as transistors, thyristors, silicon controlled rectifiers (SCRs), their likes or their combinations.

In certain non-limiting embodiments, each of the first switching element and/or the second switching element is a mirror contact relay (e.g., relay with at least one mirror contact). The mirror contact relay comprises a mirror contact via which any of the respective auxiliary signals may be provided.

The applicant has also realized that relays can benefit from fast switching times. Particularly when applied to the electrical device as discussed, e.g., a device for power transfer, a fast switching response can synergistically help efficient implementation of the logic sequences as discussed above, and also minimize other undesired effects such as arcing in current carrying relay contacts during switching.

Thus, when viewed from another perspective, there can be provided switching circuit comprising a switching element, wherein the switching element comprises a trigger circuit responsive to electrical excitation signal, wherein the excitation signal is specified to have a nominal excitation value specified for operating the switching element by applying a signal having the nominal excitation value to the trigger circuit to trigger the switching element to an activated state, and removing the signal from the trigger circuit to revert the switching element to a deactivated state, wherein the switching circuit is operable to:
- apply, to the trigger circuit, a first excitation signal to trigger the switching element to the activated state; wherein the first excitation signal has an overdrive value which is higher than the nominal excitation value, and
- transitioning the excitation applied to the trigger circuit from the first excitation signal to a second excitation signal; the second excitation signal being such it maintains the switching element in the activated state, and that the second excitation signal has a hold value which is lower than the nominal excitation value.

An advantage of doing this can also be that rather than using fast switching elements, which can be expensive, conventional ones can be used to provide faster switching times.

It shall be appreciated that in cases when the switching element is an electromechanical relay, the trigger circuit can comprise relay coil which is excited by the excitation signal e.g., by a voltage signal. Relays are rated for a nominal excitation signal value, e.g., a coil voltage value for operating the relay. Normally, overdriving the relay can affect the lifetime of the relay (e.g., by increased heating in the coil), even though a faster activation time can be achieved. Using inventive efforts, the applicant has found a way to operate switching elements with multiple excitation levels which can allow fast switching times while essentially unaffecting the relay coil lifetime. Due to fast switching times, undesired effects such as contact arcing can also be reduced.

Thus, a number of advantages can be achieved from the aforementioned. For example, due to the first excitation signal which has an overdrive value which is higher than the nominal excitation value, the activation time of the switching element is reduced. The excitation signal is then reduced to a level which is lower than the rated excitation value (nominal excitation value) of the switching element. Thus, the overdriving of the relay happens only for short periods of time, and due to reduced excitation signal thereafter, at an average the relay coil may be exposed to essentially the same amount of excitation (in some cases lower) as the coil would be exposed to under normal operation. Even though two excitation levels are mentioned here, multiple excitation levels (more than two), e.g., corresponding to different switching speeds can be implemented. For example, the overdrive value may be used only for situations when it is really needed.

Advantageously, in certain non-limiting embodiments, the hold value is such that it is insufficient to trigger the switching element from deactivated stage to activated state. This can have additional advantages in many cases, e.g., in the case of the electrical device, the controller may be operable to manage the excitation signal provided to the switching element(s). Since under activated condition of the switching element the excitation signal is set to hold value, it can ensure that no other switching element can get activated via this voltage level. For example, in case of an unintended short circuit between connections of two switching elements, the excitation signal with a hold value which is maintaining one switching element in activated state will not be sufficient to activate the other switching element. For activation, the controller may raise the excitation signal value for one or more switching elements and then revert the signal back to hold value. This can also provide a safety interlock and awareness on the controller side on which switching element is activated and which is not.

As a non-limiting example, for a relay with a nominal excitation value of 6 V (nominal coil voltage), overdrive value may be 15 V or thereabouts, and hold value may be 3.3 V or thereabouts. In this example, the overdrive value (e.g., overdrive voltage) is 250% or thereabouts of the nominal excitation value, while hold value (hold voltage) is 55% of the nominal excitation value. It shall be appreciated that these values or ranges are non-limiting in terms of levels or percentages. For example, dependent upon the switching device, overdrive value may e.g., be 150% of the nominal excitation value. Other values may also be possible, e.g., 175%, 200%, 220%, 275% or perhaps even higher in certain cases. Additionally, or alternatively, hold value may e.g., be 40% - 70% of the nominal excitation value (e.g., 40%, 50%, 60% or 65%). Dependent on the application and device to be used, suitable values can be decided.

In some non-limiting embodiments, there can also be provided a method of operating a controllable switching element comprising a trigger circuit responsive to electrical excitation signal, wherein the excitation signal is specified to have a nominal excitation value specified for operating the switching element by applying a signal having the nominal excitation value to the trigger circuit to trigger the switching element to an activated state, and removing the signal from the trigger circuit to revert the switching element to a deactivated state, which method comprises:
- applying, to the trigger circuit, a first excitation signal to trigger the switching element to the activated state; wherein the first excitation signal has an overdrive value which is higher than the nominal excitation value, and
- transitioning the excitation applied to the trigger circuit from the first excitation signal to a second excitation signal; the second excitation signal being such that it maintains the switching element in the activated state, and that the second excitation signal has a hold value which is lower than the nominal excitation value (and the hold value being insufficient to trigger the switching element from deactivated stage to activated state).

In some non-limiting embodiments, the method may further comprise:
- removing, from the trigger circuit, the second excitation signal to revert the switching element to deactivated state.

In some non-limiting embodiments, when applied to the electrical device, any of the first switching element and the second switching element comprises a trigger circuit responsive to electrical excitation signal, wherein the excitation signal is specified to have a nominal excitation value specified for operating the switching element by applying a signal having the nominal excitation value to the trigger circuit to trigger the switching element to an activated state, and removing the signal from the trigger circuit to revert the switching element to a deactivated state, wherein the switching element is operable to:
- trigger to the activated state by applying, to the trigger circuit, a first excitation signal; wherein the first excitation signal has an overdrive value which is higher than the nominal excitation value, and
- transition the excitation applied to the trigger circuit from the first excitation signal to a second excitation signal; the second excitation signal being such that it maintains the switching element in the activated state, and that the second excitation signal has a hold value which is lower than the nominal excitation value.

In some non-limiting embodiments, the hold value is such that it is insufficient to trigger the switching element from deactivated stage to activated state.

It shall be appreciated that the switching element may be a relay, e.g., with a mirror contact.

It shall also be appreciated that switching element may be further operable to:
- revert the switching element to the deactivated state by removing from the trigger circuit, the second excitation signal.

It shall also be appreciated that due to the second excitation signal being lower than the nominal excitation value, the deactivation time of the switching element can also be improved. Due to reduced value of the second excitation signal, e.g., in relays, the back electromagnetic force (EMF) is reduced due to reduced magnetic field in the relay coil. This causes the relays to be able to deactivate faster.

The applicant has further realized that traditional flyback mechanisms can have a bearing on the switching times, especially deactivating times of relays. When excitation signal is removed from relay coil, decaying magnetic field can cause a spike in voltage across relay coil. This spike can affect other components in the circuit, and can also extend deactivation times. It is usual to provide a flyback diode in the flyback path to dissipate energy or back EMF in the relay coil. By inventive efforts, the applicant has found that traditional flyback path can be further improved. When applied to the electrical device, this provides further synergistic effects.

Accordingly, when viewed from another perspective, there can be provided a flyback circuit comprising a flyback diode disposed in a flyback path between a first coil terminal and a second coil terminal of a relay coil, wherein the flyback diode is operable in reverse bias condition when the relay coil is excited (or energized) by applying an electrical excitation signal between the first coil terminal and the second coil terminal, and wherein the flyback diode is operable in forward bias condition when the electrical excitation signal is removed, thereby facilitating dissipation of energy from back EMF of the relay coil (e.g., caused due to collapsing magnetic field due to deactivation of the relay coil); wherein the flyback path also comprises a Zener diode disposed in series connection with the flyback diode such that the Zener diode is reverse biased to voltage caused by the back EMF.

In this way, the speed of relay deactivation as compared to other freewheeling (or flyback) methods can be improved. The voltage as 'seen' by the relay coil that causes the relay coil current to ramp down in this case can be much higher (e.g., with a Zener/avalanche voltage of about 33 V) as compared to using a normal silicon flyback diode which causes only around 1 V. The applicant has thus found that this works well for reducing switching times (e.g., for the device).

Thus, in certain non-limiting embodiments, wherein any of the first switching element and the second switching element of the electrical device is a relay comprising a relay coil by activation of which delivery of electrical power is facilitated, wherein the relay comprises a flyback diode disposed in a flyback path between a first coil terminal and a second coil terminal of a relay coil, wherein the flyback diode is operable in reverse bias condition when the relay coil is excited (or energized) by applying an electrical excitation signal between the first coil terminal and the second coil terminal, and wherein the flyback diode is operable in forward bias condition when the electrical excitation signal is removed, thereby facilitating dissipation of energy from back electromotive force of the relay coil (caused due to collapsing magnetic field due to deactivation of the relay coil); wherein the flyback path also comprises a Zener diode disposed in series connection with the flyback diode such that the Zener diode is reverse biased to voltage caused by the back electromotive force.

In certain non-limiting embodiments, the electrical power outputs may be protected with circuit breaker. In some non-limiting embodiments, a common circuit breaker for the power outputs may be used for protection from undesired conditions such as overload or short circuit. The circuit breaker may be responsive to a maximum power that can be delivered or distributed by the electrical device.

It shall be appreciated that there can also be provided methods for operating an electrical device. Moreover, there can also be provided software product comprising instructions which when executed by suitable device (e.g., an electrical device) cause the device to perform the herein disclosed methods. The instructions may be executed via a computer processor (e.g., the controller). The software may be embodied on a computer storage medium such as non-transitory computer storage.

It shall be appreciated that detection of the depletion signal may be done via a sense circuit. Switching from the first electrical power input to the second electrical power input may be done via switching circuit as discussed herein. The switching circuit may be controlled via controller as discussed herein. It shall also be appreciated in certain non-limiting embodiments, functional blocks discussed herein may be parts of the same component. For example, functions of switching circuit and sense circuit may be performed by the same component, or can be contemplated e.g., that any two or more of: controller, sense circuit and switching circuit are the same component. Moreover, it is possible that certain functions may be distributed to different components.

Certain embodiments will now be discussed with reference to the appended figures which illustrate the present teachings by way of non-limiting examples which can be used to realize products, methods, and software pursuant to the present teachings. For brevity, the example realizations shown in the following figures show two-terminal power inputs and outputs. It shall be appreciated that this however is not limiting to the scope or generality of the present teachings. Accordingly, the teachings cover not only single-phase, but also multi-phase such as split-phase and 3-phase power sources and their distribution. Hence, even though not explicitly shown in the following figures, e.g., a three-phase AC system is also realizable using the present teachings.

The following figures show examples with certain number of inputs and outputs. This is not limiting to the scope or generality. It can, for example, be envisaged to build a system with two inputs and a single output as well thereby still enjoying many advantages provided by the present teachings.

For purposes of the description, the terms "end," "upper," "lower," "right," "left," "vertical," "horizontal," "top," "bottom," "lateral," "longitudinal," and derivatives thereof shall relate to the embodiments as they are oriented in the drawing figures. However, it is to be understood that the present disclosure may assume various alternative variations and step sequences, except where expressly specified to the contrary. The terms "first," "second," or "third" and their likes have been used to establish a reference to the corresponding feature. For the purposes of scope of the present teachings, saying "first" or "second" does not mean that a particular feature must be attached with a particular sequence or order to be valid. It is also to be understood that the specific devices and processes illustrated in the attached drawings, and described in the following specification, are simply examples and non-limiting embodiments or aspects of the disclosed subject matter. Hence, specific dimensions and other physical characteristics related to the embodiments or aspects disclosed herein are not to be considered as limiting.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments or aspects, refer to a condition for automatically triggering an action (e.g., a specific operation of an electronic device, such as a computing device, a processor, and/or the like).

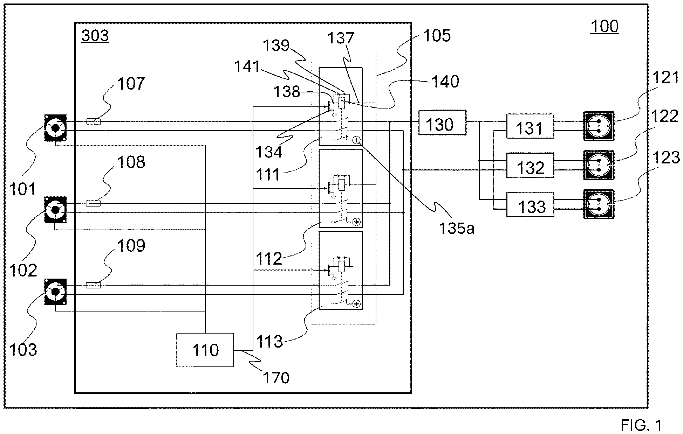

FIG. 1 shows a block diagram of an electrical device 100, which may be in the form of a portable AC power distributor or an automatic power transfer switch. The device 100 comprises three electrical power inputs 101, 102, 103 (shown here as input sockets) for seperabably connecting to power sources such as portable battery power supplies, generators, fuel cells, and also mains power which are located externally to the device 100. The inputs are separatably connectable to a variety of power sources by a common user without needing specialized training for connecting or disconnecting the power sources to the device 100.

In certain cases, the first power input 101 may be a primary input pursuant to the present disclosure. The status of primary input may either be fixed to a pre-determined input (e.g., the first power input 101), or it may be assignable to any of the inputs (e.g., selectable by the user). In some cases, first power input 101 may be connected to mains grid power. Any or both of second input 102 and third input 103 may be connectable to power sources having their respective energy reserve. It is also possible that all three electrical power inputs 101, 102, 103 are connected to individual power sources each having its own energy reserve (e.g., limited fuel supply, charge, capacity, or their likes).

The power inputs 101, 102, 103 are connected to switching circuit 105. The switching circuit 105 comprises three switching components, shown here as relays 111, 112, 113 that are each connected respectively to one of the power inputs 101, 102, 103. On the output side of the switching stage 105, the contacts of the relays are connected so that any of the power inputs 101, 102, 103 may be used to route power the three electrical power outputs 121, 122, 123. In some cases, at least some of the electrical power outputs 121, 122, 123 may be individually disconnectable internally via the device 100 such that they are prevented from receiving electrical power which is being provided at other electrical power outputs (this aspect is not shown in FIG. 1).

The inputs 101, 102, 103 are in this example case each shown respectively protected via their own fuse 107, 108, 109.

The power inputs 101, 102, 103 may include a sense circuit for providing depletion information or depletion signal for the power source connected to the respective power input 101, 102, 103 to a controlling means, shown here implemented as a controller 110.

Controller 110 is connected to control inputs of the relays 111, 112, 113. The controller 110 is operable such that at any given time only one of the power inputs 101, 102, 103 may be continuously connected to the power outputs 121, 122, 123.

If for example, the power input 101 would be used for providing power at the outputs 121, 122, 123, the relay 111 would e.g., be in an activated or energized state (e.g., "ON" state e.g., by energizing first relay coil 140) thus connecting power conductors originating from the first power input 101 to the power outputs 121, 122, 123. During this time, relays 102 and 103 would e.g., be in deenergized state (e.g., "OFF"), resulting in their respective power conductors to be isolated from the power outputs 121, 122, 123.

In response to a depletion signal (e.g., first depletion signal, e.g., detected by sense circuit) related to the first input 101, the controller 110 may deenergize the first relay 111 and energize the second relay 112, thus connecting the second power input 102 to the power outputs 121, 122, 123. The energization/deenergization may be done in a break-before-make fashion, or in make-before-make fashion. In this example, the sense circuit is a part of the controller 110. Thus, controller 110 is operable to detect the depletion signal related to any of the inputs 101, 102, 103. The first depletion signal or depletion information, may e.g., in the form of one or more operational parameters related to the power source which us connected at the first input 101. For example, the depletion signal may correspond to a change in voltage of power source connected at the first input 101 and/or it may be a change in the frequency of the power source. The first depletion signal is indicative of that a loss of power at the first input 101 is imminent. As an example, imminent may be considered any event occurring within time from less than a second (e.g., in microseconds) to minutes or tens of minutes, but usually not larger than an hour. In some cases, the depletion signal may be communicatively provided e.g., via a communications link (not shown in FIG. 1) between the power source and the device 100. In some cases, the communications link may at least partially be included in the separatably connectable connection between the source and the respective electrical power input (e.g., as PLC). The separatably connectable connection (e.g., the inputs 101, 102, 103 and their corresponding cables for connecting to the power sources) preferably comprise power sockets/plug arrangement which is connectable/disconnectable by a common user.

On the output side, the device 100 comprises safety components such as line breaker 130 and other protection devices 131, 132 and 133 such as RCDs (shown in this example as each one dedicated to each of the outputs 121, 122 and 123).

The switching circuit 105 is operable to route electrical power from the electrical power inputs to the electrical power output (e.g., any one or more of 121, 122, and 123, but in this example to all outputs 121, 122 and 123). The switching circuit 105 comprises three switching elements shown here as first relay 111, second relay 112 and third relay 113. The first switching element 111 is activable to facilitate delivery of electrical power from the first electrical power input 101 to the electrical power output 121, 122, 123. The second switching element 112 is activable to facilitate delivery of electrical power from the second electrical power input 102 to the electrical power output 121, 122, 123. It is desirable that only one of the inputs 101, 102 and 103 are sourcing power at the output 122, 122, 123 at least on a long-term basis (e.g., a transition during make-before-break switching sequence is not considered a long-term basis).

In this example, these switching elements are shown to be of the same type, however they may be of different types too. The controller 110 is operable to control, switching circuit 105, e.g., the relays 111, 112 and 113 via an interface 170. The interface 170 may be bidirectional, e.g., comprising an input interface and an output interface either as dedicated ports or as input/output ports.

The electrical device 100 is operable to determine a timing sequence of switching between the first electrical power input 101 and the second electrical power input 102. The timing sequence can be break-before-make or it may be make-before-break sequence. The break-before-make sequence may implement a make time interval (e.g., make time value) between breaking and making of connections respectively to the respective inputs. The make-before-break may implement a break time interval (e.g., break time value) between making and breaking of connections respectively to the respective inputs. It shall be appreciated that teachings are not limited to the first electrical power input 101 and the second electrical power input 102 only. The same can also apply when routing of power from any input to the output (any one, some, or all). For example, the electrical device 100 is also operable to determine a timing sequence of switching between the second electrical power input 102 and the third electrical power input 103. Similarly, the electrical device 100 is also operable to determine a timing sequence of switching between the second electrical power input 102 and the first electrical power input 101, or from the first electrical power input 101 and the third electrical power input 103, in any relevant order. It shall be appreciated that reference prefixes such as "first", "second" and "third" are used in a non-limiting manner to be able to refer to the specific parts of the device for the ease of understanding. In reality, for determining the scope of present teachings, e.g., any of the inputs may be considered "first" input.

It shall be appreciated that an alternative to the break-before-make logic may be to have a latch circuit which gets reset when all switching elements 111, 112, 113 are deactivated (e.g., "OFF"). This can for example be measured via the control signals for the switching elements. Switching "ON" of any switching element 111, 112, 113 may only be allowed when latch is in a reset state.

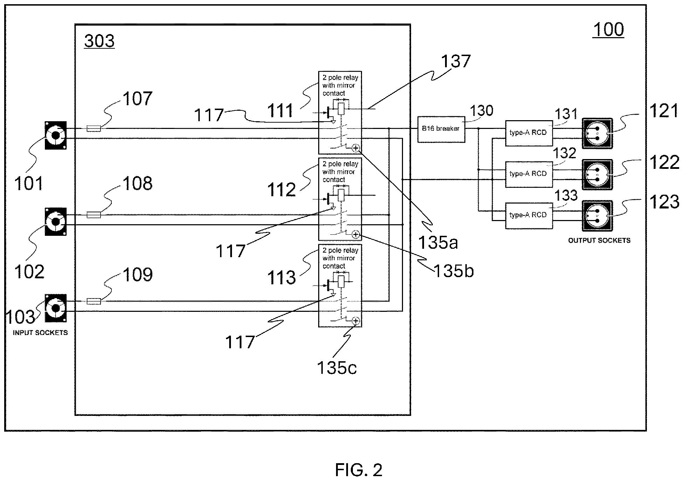

Now certain relay components will be discussed with reference to the first relay 111, however similar components can also be seen in other relays 112 and 113 which in this example have similar functionality. The first relay 111 comprises a mirror contact 135a, this can provide a first auxiliary signal which is usable to confirm status of the first switching element 111 (e.g., whether the relay 111 is activated and/or it is deactivated). The relay 111 comprises a trigger circuit, shown here comprising a relay coil 140. The trigger circuit is controllable by the controller 110 via the interface 170. The relay 111 is shown comprising a switch 134 which can be controlled by the controller 110 to activate or deactivate the relay coil 140. The relay coil 140 has a first coil terminal 137 and a second coil terminal 138. The first coil terminal 137 may be connected to an energizing source (e.g., a voltage source such as a voltage regulator or voltage selector) which supplies electrical excitation signal to the relay coil 140. For triggering the relay coil 140 so as to energize or activate it, the controller can provide a control signal to the switch 134 which connects the second relay terminal 138 to a voltage (e.g., ground terminal 117 - ref. FIG. 2) which is lower than the voltage of the energizing source, thereby completing the trigger circuit such that excitation signal is applied to the relay coil 140. It shall be appreciated that in this example, this will result in connecting the first electrical input 101 to the electrical power outputs 121, 122 and 123. As the relay 111 gets energized, the mirror contact 135a will also change state indicating that the relay 111 is in an activated state. The mirror contact 135a can be used by the controller 110 to monitor the state of the relay 111. Similarly, states of other relays 112 and 113 can also be monitored. The mirror contact is preferably a normally closed ("NC") contact. In some non-limiting embodiments, the mirror contact 135a (e.g., the NC mirror contact) is used only for readback via the controller 110.

The controller 110 can use this information of relay states to implement timing sequence between respective relays. Thus, rather than depending on a guess work or fixed timings, the controller 110 can control specific switching sequences by being aware of what state the relays are in at any given time.

The monitoring aspect can also allow the controller to prevent undesired states from occurring, and to bring the device 100 to a safe state should an undesired state occur. For example, when controlling a make-before-break sequence, in response to the break time exceeding a predetermined break time value, the controller 110 may be operable to deactivate both the first switching element 111 and the second switching element 112, thereby disconnecting both electrical power inputs from the electrical power outputs 121, 122, 123.

To deactivate the relay 111, the controller 110 can control the switch 134 such that the trigger circuit is broken such that excitation signal is not applied to the relay coil 140 thereby causing the relay coil 140 to be deenergized.

The relay 111 also comprises a flyback path between the first relay terminal 137 and the second relay terminal 138. A flyback diode 139 is disposed in the flyback path for dissipating energy or back EMF generated by decaying magnetic field in the relay coil 140 due to deactivation of the relay 111. For speeding up dissipation of the energy, a Zener diode 141 is shown disposed in the flyback path. The Zener 141 is placed in series to the flyback diode 139 such that it is reverse biased in presence of back EMF of the relay coil 140.

It shall be appreciated that for implementing a break-before-make sequence between the first input 101 and the second input 102, the switching circuit 105 may be operable (e.g., controllable via the controller 110) to prevent delivery of electrical power from the first electrical power input 101 to the electrical power output 121, 122, 123, by deactivating the first switching element 111, thereby disconnecting the first electrical power input 101 from the electrical power output 121, 122, 123. Then within a make time interval, the switching circuit 105 may be operable (e.g., controllable via the controller 110) to activate the second switching element 112, thereby connecting the second electrical power input 102 to the electrical power output 121, 122, 123 to establish delivery of electrical power from the second electrical power input 102 to the electrical power output 121, 122, 123.

It shall be appreciated that for implementing a make-before-break sequence between the first input 101 and the second input 102 the switching circuit 105 may be operable (e.g., controllable via the controller 110) to activate the second switching element 112, thereby connecting the second electrical power input 102 to the electrical power output 121, 122, 123 to establish delivery of electrical power from the second electrical power input 102 to the electrical power output 121, 122, 123. Then within a break time interval, the switching circuit 105 may be operable (e.g., controllable via the controller 110) to prevent delivery of electrical power from the first electrical power input 101 to the electrical power output 121, 122, 123 by deactivating the first switching element 111, thereby disconnecting the first electrical power input 101 from the electrical power output 121, 122, 123.

For implementing the break-before-make sequence, the controller 110 may be operable to control the switching circuit 105 to switch from the first electrical power input 101 to the second electrical power input 102 by activating the second switching element 112 after registering deactivated status of the first switching element 111. This may be implemented e.g., by reading the first auxiliary signal which is confirmative of the deactivated status of the first switching element 111. The first auxiliary signal may e.g., be provided via the first mirror contact 135a of the first switching element 111.

For enhancing safety further, in the make-before-break sequence, in response to the break time exceeding a predetermined break time value, the controller 110 may be operable to deactivate both the first switching element 111 and the second switching element 112. By doing so, both electrical power inputs 101 and 102 are disconnected from the electrical power output 121, 122, 123 thereby preventing prolonged simultaneous connection between the two inputs 101 and 102 (e.g., connection between two different power sources at those inputs).

FIG. 2 shows an alternative view of the electrical device 100, particularly showing fewer components to focus on how electrical power inputs 101-103 (shown here as input sockets) are arranged to connect to the electrical power outputs 121-123 (shown here as output sockets). Such sockets can make the device 100 easily separatably connectable to a variety of electrical power sources and electrical power consumers even when used by a common user. The line breaker 130 may for example be a B16 Breaker. Other protection devices 131, 132 and 133 are shown here as type-A RCDs. In FIG. 2, second mirror contact 135b of the second relay 112, and third mirror contact 135c of the third relay 113 are also labeled. In the discussion, the mirror contacts may be referred to collectively or individually as reference numeral 135. The relays 111, 112 and 113 in this example are shown as two-pole relays. It shall be appreciated that it is non-limiting to the present disclosure.

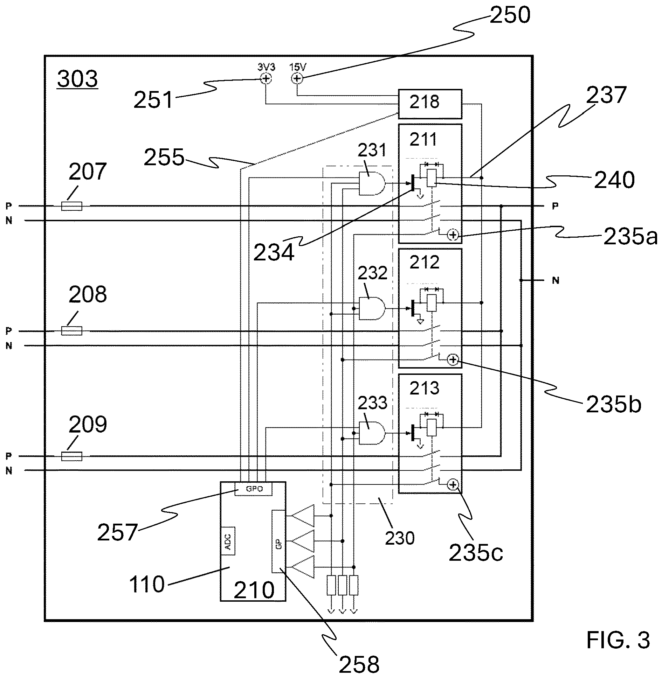

FIG. 3 shows an aspect of the present teachings which can be applied individually or in combination with different aspects discussed herein for additional advantages. FIG. 3 can thus, in some non-limiting embodiments, be an internal module 303 of the electrical device 100.

Module 303 in FIG. 3 shows certain non-limiting implementation of protection aspects. Certain components have been renumbered as numerals; however, it shall be recognized the similarity with components as shown in FIG. 1 and FIG. 2. For example, fuses 207 - 209 can be similar to fuses 107 - 109 in FIGS. 1 and 2, relays 211 - 213 can be similar to the relays 111 - 113, controller 210 can be similar to the controller 110, mirror contacts 235 can be similar to the mirror contacts 135, switch 234 can be similar to the switch 134, first relay coil 240 can be similar to the first relay coil 140, and so forth.

With reference to FIG. 1, where interface 170 was shown, it shall be recognized from FIG. 3 that the controller 210 in this example has an output interface 257 and an input interface 258. Output interface 257 is used to provide control signals to various switches (e.g., switch 234) of the relays 211, 212 and 213. Input interface 258 in this example is used to read out status of the mirror contacts 235. Thus, via the input interface 258, auxiliary signals provided by the respective switching elements 211, 212 and 213 are readable at the controller 210. An auxiliary signal can be indicative of an activated state and/or deactivated state of the corresponding switching element. In some non-limiting embodiments, the status signal is a binary signal (e.g., 0/1 or "yes"/"no"), so one state of the relay is also informative of the other state. The controller 210 may also comprise other peripherals or functionalities such as an analog to digital converter (ADC).

It shall be appreciated that terms like "activated", "deactivated", "activated", "deactivated", "open", "close" and relay contact states (normally open (NO) / normally closed (NC)), whether a relay energized-to-connect an input to output, or otherwise, are non-limiting to scope and generality of the disclosure. It shall be appreciated that the teachings can also be implemented with a different contact, and/or energizing arrangement as compared to what are shown in these examples, and those arrangements are also to be considered covered by the present teachings. For example, "activated" can mean activated to switch "ON" (e.g., activated to connect), or dependent upon the realization, "activated" can mean activated to switch "OFF" (e.g., activated to disconnect).

For driving the switching elements 211 - 214, the controller 210 may use a control logic 230. For example, for activating the switch 234, the controller 210 may activate the corresponding input signal of the first AND gate 231 via the output interface 257. However, the same AND gate 231 is provided two other inputs which are auxiliary signals from the other relays 212 and 214. Hence, the switch 234 (and hence the first relay 211) cannot be activated by activating any single input of the AND gate 231 alone, rather all inputs of the gate 231 will need to be "high". Thus, output of the controller 210 alone is insufficient to activate the switch 234. This can ensure that only one of the relays 211, 212 and 213 is activated at a time. As an additional layer of protection, the mirror contacts 235 also provide auxiliary signals at the input port such that the controller 210 is aware of the status of each switching element 211, 212 and 213. Thus, the controller can control timing, e.g., the make time. AND logic shown here is just an example, it shall be appreciated that other logics are also possible.

As a further layer of protection and for improving relay switching times, multiple excitation levels 250, 251 are provided for the relays 211 - 213. The excitation levels 250, 251 are here shown as voltage domains, i.e., a first excitation level (in this example, a 15 V domain) 250 and a second excitation level (in this example, a 3.3 V domain) 251. The excitation levels 250, 251 are selectable via a voltage selector 218 which is controllable via the controller 210 via excitation control signal 255. It shall be appreciated that the first excitation level 250 provides an overdrive value, while the second excitation level 251 provides a hold value for the excitation signal which can be provided to the respective relays 211 - 213. For example, the relays have a nominal excitation value (rated coil voltage) of 6 V, so the first excitation level 250 is higher than the nominal excitation value, and the second excitation level 251 is lower than the nominal excitation value. Preferably, the hold value is insufficient to trigger the relays 211 - 213 from deactivated state to activated state.

In some non-limiting embodiments, the controller 210 is operable to control the voltage selector 218 to apply the first excitation level 250 at the first relay terminal 237 for activating the first relay 211. After the relay 211 is activated (e.g., the controller 210 reads the mirror contact 235a), the controller 210 is operable to control the voltage selector 218 to apply the second excitation level 251 at the first relay terminal 237 for keeping the first relay 211 activated, but with a lower excitation level. This can not only save power, reduce heating in the relay coil 240, but also result in a shorter deactivation time (switching "OFF") of the relay 211, e.g., by reduction in back EMF.

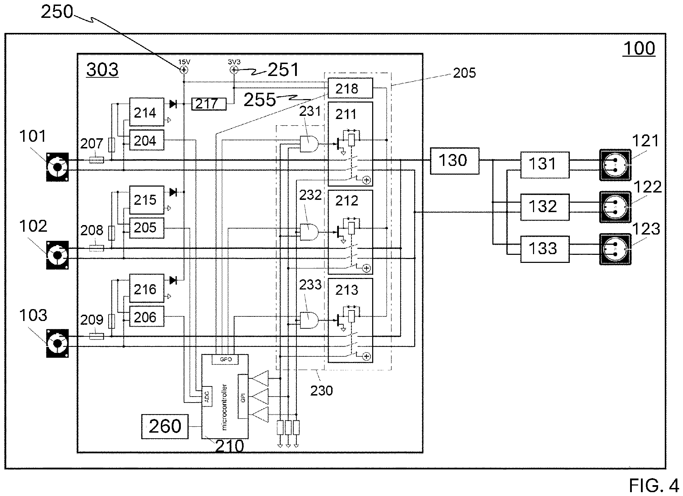

FIG. 4 shows another example, in this case an implementation of the module 303 in electrical device 100.

Sensor 204, 205, 206 is provided for each of the inputs 101, 102, 103, which can be used to provide a depletion signal related to their corresponding input. The sensor 204, 205, 206 may be voltage sensor sensing voltage at the corresponding electrical power input 201, 202, 203. Each sensor 204, 205, 206 provides sense signals to the controller 210 via an ADC channel. The controller may also be connected to a communications link 260, which may be wired (e.g., digital bus such as CAN or other types) and/or it may be wireless (e.g., Bluetooth low energy (BLE), WiFi, mobile data, PLC, etc.)

Also provided at each of the power inputs 201, 202, 203 is a circuit for converting electrical power at any of the inputs 201, 202, 203 to a level that can be used internally in the electrical device 100. The device 100 can thus be made without any internal power storage components such as batteries or such. For example, the circuit may convert input AC-voltage to a DC-voltage that is used internally. The circuit for converting for example may comprise one or more components such as transformer, rectifier, regulator and/or power converter. In the example of FIG. 4, the circuit comprises AC/DC-converter 214, 215, 216 that converts AC voltage at the respective input 201, 202, 203 into a DC voltage that is internally used to supply internal components such as the controller 210, switching elements 211 - 213 and logic module 230.

The converters 214, 215, 216 can provide an internal DC voltage of 15 V (e.g., for the first excitation level 250) from any of the inputs 101, 102, 103, which in this example is further used to generate a 3.3 V domain which can be more suitable for the electronic components such as the controller 210 and the logic module 230. An advantage of this realization is that a standard 3.3 V domain is not only used to power internal components, but also used for providing the second excitation level 251 thus saving an additional power converter or such components for providing an additional voltage domain.

It shall be appreciated that the above device aspects can also be presented as method aspects, e.g., method for operating an electrical device 100. Such aspects are also deemed to be disclosed herein, and for brevity need not be repeated verbatim. Any method aspects may also be used to realize a software product which is usable to perform the method steps.

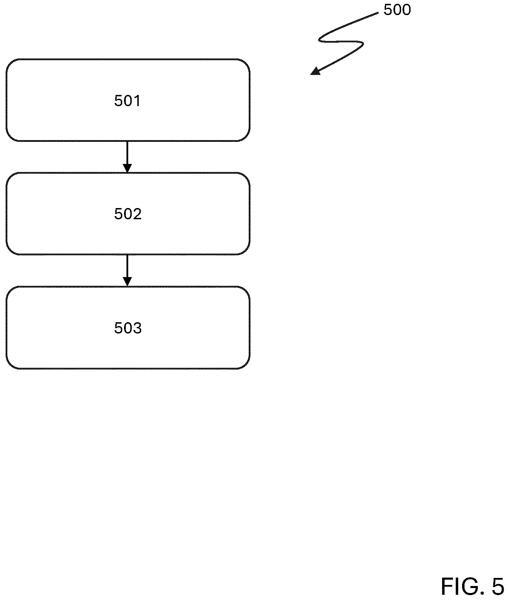

As an example aspect, FIG. 5 shows a flowchart 500 depicting an aspect of the present teachings. The method aspects may be realized independently or as combination to each another via the electrical device 100 e.g., as discussed as various aspects in the previous figures and the rest of present disclosure. The flowchart 500 may also be used to realize a software product.

In 501, it is applied to a trigger circuit (e.g., 140 or 240), a first excitation signal to trigger the switching element (111 or 211) to an activated state. The first excitation signal has an overdrive value (e.g., 15 V) which is higher than a nominal excitation value (e.g., 6 V).

The trigger circuit (140 or 240) may be part of a controllable switching element (111 or 211). The trigger circuit (140 or 240) is responsive to electrical excitation signal (e.g., voltage). The excitation signal is specified to have the nominal excitation value (e.g., 6 V) specified for operating the switching element (111 or 211) by applying a signal having the nominal excitation value (e.g., 6 V) to the trigger circuit (140 or 240) to trigger the switching element (111 or 211) to an activated state. The switching element (111 or 211) can be reverted to deactivated state by removing the signal from the trigger circuit.

In 502, excitation applied to the trigger circuit (140 or 240) is transitioned from the first excitation signal to a second excitation signal, e.g., via the voltage selector 218. The second excitation signal is such that it maintains the switching element (111 or 211) in the activated state. The second excitation signal has a hold value (e.g., 3.3 V) which is lower than the nominal excitation value (e.g., 6 V). The hold value (e.g., 3.3 V) is insufficient to trigger the switching element (111 or 211) from deactivated stage to activated state.

Optionally, in 503, it is removed, from the trigger circuit (140 or 240), the second excitation signal to revert the switching element (111 or 211) to deactivated state.

It shall be appreciated that the flowchart 500 can also be implemented in the electrical device 100.

In context of an example operation in the device 100, the following operating steps can be implemented.

This is an example sequence of events (e.g., for switching from the first electrical power input 101 to the second electrical power input 102) which the device 100 may implement as a break-before-make sequence:
- Voltage (e.g., measured by sensor 204) on the first electrical power input 101 drops (or a first depletion signal is generated)
- Relay 111 or 211 at the first electrical power input 101 is deactivated
   o current and magnetic field of relay coil 140 or 240 decays
   o Relay 111 or 211 spring element disengages main contacts thereby disconnecting the first input 101 from the output 121, 122, 123.
   ∘ mirror contact 135a or 235a of relay 111 or 211 closes thereby providing (e.g., toggling) the auxiliary signal for relay 111 or 211, thereby confirming that the relay 111 or 211 is disconnected,
- Controller 110 or 210 enables boost voltage (first excitation level 250) e.g., via voltage selector 218 for activating the second relay 112 or 210, and enables signal at the second AND gate 232,
   ∘ Current and magnetic field of relay coil (of 112 or 212) bulid up (process is faster due to overdrive value, e.g., 15 V)
   ∘ mirror contact of the second relay 112 or 212 opens
   ∘ magnetic force closes main contacts of the second relay 112 or 212, thereby connecting the second input 102 to the electrical power output 121, 122, 123.
- Controller 110 or 210, in some cases, keeps the boost voltage (first excitation level 250) available additionally for a short time (e.g., around 5 - 20 ms, e.g., around 15 ms)
- Controller 110 or 210 turns boost voltage OFF by transitioning to the second excitation level 251 (e.g., 3.3 V), e.g., via voltage selector 218,
   ∘ The second relay 112 or 212 is in activated state with a lower voltage (hold value - e.g., 3.3 V) which results in e.g., reduced coil current. The hold value is such that it is above the minimum holding current rated for the relay 112 or 212.

Although embodiments or aspects have been described in detail for the purpose of illustration, it is to be understood that such detail is solely for that purpose and that the disclosure is not limited to the disclosed embodiments or aspects, but, on the contrary, is intended to cover modifications and equivalent arrangements that are within the spirit and scope of the appended claims. For example, it is to be understood that the present disclosure contemplates that, to the extent possible, one or more features of any embodiment or aspect can be combined with one or more features of any other embodiment or aspect.

Certain aspects of the present teachings will now be summarized in the following clauses:
Clause 1: An electrical device comprising: a first electrical power input; a second electrical power input; an electrical power output; a switching circuit operable to route electrical power from the electrical power inputs to the electrical power output; the switching circuit comprising: a first switching element activable to facilitate delivery of electrical power from the first electrical power input to the electrical power output; and a second switching element activable to facilitate delivery of electrical power from the second electrical power input to the electrical power output; a controller operable to control the switching circuit to switch to the first electrical power input or the second electrical power input for selecting which of said electrical power inputs is to supply electrical power at the electrical power output; wherein the electrical device is operable to determine a timing sequence of switching between the first electrical power input and the second electrical power input.
Clause 2: An electrical device comprising:
   - a first electrical power input connectable to receive electrical power from a first power source;
   - a second electrical power input connectable to receive electrical power from a second power source different from the first power source;
   - an electrical power output connectable to supply electrical power to an electrical power consumer;
   - a switching circuit operable to route electrical power from the electrical power inputs to the electrical power output; wherein the switching circuit comprises:
      o a first switching element activable to facilitate delivery of electrical power from the first electrical power input to the electrical power output; and
      ∘ a second switching element activable to facilitate delivery of electrical power from the second electrical power input to the electrical power output;
   - a controller operable to control the switching circuit to switch to the first electrical power input or the second electrical power input for selecting which of said electrical power inputs is to supply electrical power at the electrical power output; wherein
   the electrical device is operable to determine a timing sequence of switching between the first electrical power input and the second electrical power input.
Clause 3. Electrical device of clause 1 or 2, wherein the timing sequence is a break-before-make sequence in which the switching circuit is operable to:
   - prevent delivery of electrical power to the electrical power output from the first electrical power input by deactivating the first switching element, thereby disconnecting the first electrical power input from the electrical power output; and then within a make time,
   - activate the second switching element, thereby connecting the second electrical power input to the electrical power output to establish delivery of electrical power from the second electrical power input to the electrical power output.
Clause 4. Electrical device of any of clauses 1-3, wherein the timing sequence is a make-before-break sequence in which the switching circuit is operable to:
   - activate the second switching element, thereby connecting the second electrical power input to the electrical power output to establish delivery of electrical power from the second electrical power input to the electrical power output; and then within a break time,
   - prevent delivery of electrical power to the electrical power output from the first electrical power input by deactivating the first switching element, thereby disconnecting the first electrical power input from the electrical power output.
Clause 5. Electrical device according to any of the previous clauses, wherein the first switching element is operable to provide a first auxiliary signal indicative of state (e.g., activated or deactivated state) of the first switching element, and the second switching element is operable to provide a second auxiliary signal indicative of state (e.g., activated or deactivated state) of the second switching element.
Clause 6. Electrical device of any of above clauses, wherein in the break-before-make sequence, the controller is operable to control the switching circuit to switch from the first electrical power input to the second electrical power input by activating the second switching element after registering deactivated status (e.g., via the first auxiliary signal, e.g., which is confirmative of the deactivated status) of the first switching element.
Clause 7. Electrical device of any of clauses 4-6, wherein in the make-before-break sequence, in response to the break time exceeding a predetermined break time value, the controller is operable to deactivate both the first switching element and the second switching element, thereby disconnecting both electrical power inputs from the electrical power output.
Clause 8. Electrical device of any of the above clauses, wherein any of the first switching element and the second switching element is a semiconductor switch or a relay, a semiconductor switch such as a TRIAC or a solid-state relay (e.g., SSR based on electronic components or semiconductors such as transistors, thyristors, silicon controlled rectifiers (SCR), their likes or their combinations).
Clause 9. Electrical device of any of the above clauses, wherein any of the first switching element and the second switching element is a relay comprising a mirror contact, and wherein any of the auxiliary signals is provided via the mirror contact of the respective relay.
Clause 10. Electrical device of clause 9, wherein any of the auxiliary signals is provided via the mirror contact of the respective relay, the mirror contact preferably being a normally closed ("NC") contact.
Clause 11. Electrical device of any of the above clauses, wherein any of the first switching element and the second switching element comprises a trigger circuit responsive to electrical excitation signal, wherein the excitation signal is specified to have a nominal excitation value specified for operating the switching element by applying a signal having the nominal excitation value to the trigger circuit to trigger the switching element to an activated state, and removing the signal from the trigger circuit to revert the switching element to a deactivated state, wherein the switching element is operable to:
   - trigger to the activated state by applying, to the trigger circuit, a first excitation signal; wherein the first excitation signal has an overdrive value which is higher than the nominal excitation value, and
   - transition the excitation applied to the trigger circuit from the first excitation signal to a second excitation signal; the second excitation signal being such it maintains the switching element in the activated state, and that the second excitation signal has a hold value which is lower than the nominal excitation value.
Clause 12. Electrical device of clause 11, wherein the hold value is insufficient to trigger the switching element from deactivated state to activated state.
Clause 13. Electrical device of clause 11 or 12, wherein the switching element is further operable to:
   - revert the switching element to the deactivated state by removing from the trigger circuit, the second excitation signal.
Clause 14. Electrical device of any of the above clauses 8 - 13, wherein any of the first switching element and the second switching element is a relay comprising a relay coil by activation of which delivery of electrical power is facilitated, wherein the relay comprises a flyback diode disposed in a flyback path between a first coil terminal and a second coil terminal of a relay coil, wherein the flyback diode is operable in reverse bias condition when the relay coil is excited (or energized) by applying an electrical excitation signal between the first coil terminal and the second coil terminal, and wherein the flyback diode is operable in forward bias condition when the electrical excitation signal is removed, thereby facilitating dissipation of energy from back electromotive force of the relay coil (e.g., caused due to collapsing magnetic field due to deactivation of the relay coil); wherein the flyback path also comprises a Zener diode disposed in series connection with the flyback diode such that the Zener diode is reverse biased to voltage caused by the back electromotive force.
Clause 15. Electrical device of any of the above clauses, wherein each electrical power input is separatably connectable to its corresponding electrical power source (e.g., in a manner to be usable (connectable / disconnectable) by a common user).
Clause 16. Electrical device of any of the above clauses, wherein each electrical power output is separatably connectable to its corresponding electrical power consumer (e.g., in a manner to be usable (connectable / disconnectable) by a common user).
Clause 17. Electrical device according to any of the previous clauses, wherein the first power source and/or the second power source is an energy unit having its own energy storage reserve.
Clause 18. Electrical device according to any of the previous clauses, wherein electrical power for operating internal components of the electrical device is derived from the electrical power available at any one or more electrical power inputs of the electrical device. Internal components of the electrical device are thus powered entirely by the power source(s) which are connected (online / available) at any of the inputs.
Clause 19. Electrical device of any of the previous clauses, further comprising a plurality of electrical power outputs, preferably each electrical power output being separatably connectable to an individual electrical power consumer.
Clause 20. Electrical device of any of the previous clauses, further comprising at least one individual protection device (e.g., RCD) for each electrical power output.
Clause 21. Electrical device of any of the previous clauses, operable to allow hot-swap of any electrical power source at any of the electrical power inputs.
Clause 22. A method of operating a controllable switching element comprising a trigger circuit responsive to electrical excitation signal, wherein the excitation signal is specified to have a nominal excitation value specified for operating the switching element by applying a signal having the nominal excitation value to the trigger circuit to trigger the switching element to an activated state, and removing the signal from the trigger circuit to revert the switching element to a deactivated state, which method comprises:
   - applying, to the trigger circuit, a first excitation signal to trigger the switching element to the activated state; wherein the first excitation signal has an overdrive value which is higher than the nominal excitation value, and
   - transitioning the excitation applied to the trigger circuit from the first excitation signal to a second excitation signal; the second excitation signal being such it maintains the switching element in the activated state, and that the second excitation signal has a hold value which is lower than the nominal excitation value (preferably, the hold value being insufficient to trigger the switching element from deactivated stage to activated state).
Clause 23. Method of clause 22, further comprising
   - removing, from the trigger circuit, the second excitation signal to revert the switching element to the deactivated state.
Clause 24. Flyback circuit comprising a flyback diode disposed in a flyback path between a first coil terminal and a second coil terminal of a relay coil, wherein the flyback diode is operable in reverse bias condition when the relay coil is excited (or energized) by applying an electrical excitation signal between the first coil terminal and the second coil terminal, and wherein the flyback diode is operable in forward bias condition when the electrical excitation signal is removed, thereby facilitating dissipation of energy from back electromotive force of the relay coil (caused due to collapsing magnetic field due to deactivation of the relay coil); wherein the flyback path also comprises a Zener diode disposed in series connection with the flyback diode such that the Zener diode is reverse biased to voltage caused by the back electromotive force.
Clause 25. A circuit or device comprising means to perform the steps of any of the above method clauses.
Clause 26. A software product comprising instructions which when executed by a suitable circuit or device (e.g., by a controller), cause the circuit to perform the steps (e.g., via the controller) of the above method clauses.

## Claims

1. An electrical device comprising:
- a first electrical power input connectable to receive electrical power from a first power source;
- a second electrical power input connectable to receive electrical power from a second power source different from the first power source;
- an electrical power output connectable to supply electrical power to an electrical power consumer;
- a switching circuit operable to route electrical power from the electrical power inputs to the electrical power output; wherein the switching circuit comprises:
o a first switching element activable to facilitate delivery of electrical power from the first electrical power input to the electrical power output; and
∘ a second switching element activable to facilitate delivery of electrical power from the second electrical power input to the electrical power output;
- a controller operable to control the switching circuit to switch to the first electrical power input or the second electrical power input for selecting which of said electrical power inputs is to supply electrical power at the electrical power output; wherein
the electrical device is operable to determine a timing sequence of switching between the first electrical power input and the second electrical power input.

2. Electrical device of claim 1, wherein the timing sequence is a break-before-make sequence in which the switching circuit is operable to:
- prevent delivery of electrical power to the electrical power output from the first electrical power input by deactivating the first switching element, thereby disconnecting the first electrical power input from the electrical power output; and then within a make time,
- activate the second switching element, thereby connecting the second electrical power input to the electrical power output to establish delivery of electrical power from the second electrical power input to the electrical power output.

3. Electrical device of claim 2, wherein the timing sequence is a make-before-break sequence in which the switching circuit is operable to:
- activate the second switching element, thereby connecting the second electrical power input to the electrical power output to establish delivery of electrical power from the second electrical power input to the electrical power output; and then within a break time,
- prevent delivery of electrical power to the electrical power output from the first electrical power input by deactivating the first switching element, thereby disconnecting the first electrical power input from the electrical power output.

4. Electrical device of any of the above claims, wherein the first switching element is operable to provide a first auxiliary signal indicative of state of the first switching element, and the second switching element is operable to provide a second auxiliary signal indicative of state of the second switching element.

5. Electrical device of any of above claims 2-4, wherein in the break-before-make sequence, the controller is operable to control the switching circuit to switch from the first electrical power input to the second electrical power input by activating the second switching element after registering deactivated status of the first switching element.

6. Electrical device of any of claims 3 or 4, wherein in the make-before-break sequence, in response to the break time exceeding a predetermined break time value, the controller is operable to deactivate both the first switching element and the second switching element, thereby disconnecting both electrical power inputs from the electrical power output.

7. Electrical device of any of the above claims, wherein any of the first switching element and the second switching element is a semiconductor switch or a relay, a semiconductor switch such as a TRIAC or a solid-state relay.

8. Electrical device of claim 7, wherein any of the first switching element and the second switching element is a relay comprising a mirror contact, and wherein any of the auxiliary signals is provided via the mirror contact of the respective relay.

9. Electrical device of any of the above claims, wherein any of the first switching element and the second switching element comprises a trigger circuit responsive to electrical excitation signal, wherein the excitation signal is specified to have a nominal excitation value specified for operating the switching element by applying a signal having the nominal excitation value to the trigger circuit to trigger the switching element to an activated state, and removing the signal from the trigger circuit to revert the switching element to a deactivated state, wherein the switching element is operable to:
- trigger to the activated state by applying, to the trigger circuit, a first excitation signal; wherein the first excitation signal has an overdrive value which is higher than the nominal excitation value, and
- transition the excitation applied to the trigger circuit from the first excitation signal to a second excitation signal; the second excitation signal being such it maintains the switching element in the activated state, and that the second excitation signal has a hold value which is lower than the nominal excitation value.

10. Electrical device of claim 9, wherein the switching element is further operable to:
- revert the switching element to the deactivated state by removing from the trigger circuit, the second excitation signal.

11. Electrical device of any of the above claims, wherein any of the first switching element and the second switching element is a relay comprising a relay coil by activation of which delivery of electrical power is facilitated, wherein the relay comprises a flyback diode disposed in a flyback path between a first coil terminal and a second coil terminal of a relay coil, wherein the flyback diode is operable in reverse bias condition when the relay coil is energized by applying an electrical excitation signal between the first coil terminal and the second coil terminal, and wherein the flyback diode is operable in forward bias condition when the electrical excitation signal is removed, thereby facilitating dissipation of energy from back electromotive force of the relay coil; wherein the flyback path also comprises a Zener diode disposed in series connection with the flyback diode such that the Zener diode is reverse biased to voltage caused by the back electromotive force.

12. Electrical device of any of the above claims, wherein each electrical power input is separatably connectable to its corresponding electrical power source, and each electrical power output is separatably connectable to its corresponding electrical power consumer.

13. A method of operating a controllable switching element comprising a trigger circuit responsive to electrical excitation signal, wherein the excitation signal is specified to have a nominal excitation value specified for operating the switching element by applying a signal having the nominal excitation value to the trigger circuit to trigger the switching element to an activated state, and removing the signal from the trigger circuit to revert the switching element to a deactivated state, which method comprises:
- applying, to the trigger circuit, a first excitation signal to trigger the switching element to the activated state; wherein the first excitation signal has an overdrive value which is higher than the nominal excitation value, and
- transitioning the excitation applied to the trigger circuit from the first excitation signal to a second excitation signal; the second excitation signal being such it maintains the switching element in the activated state, and that the second excitation signal has a hold value which is lower than the nominal excitation value.

14. A circuit comprising means to perform the steps of the above method claim.

15. A software product comprising instructions which when executed by a suitable circuit, cause the circuit to perform the steps of the above method claim.
